# EUROPEAN PATENT APPLICATION

(11) **EP 1 529 978 A1**
(43) Date of publication of application: **11.05.2005**
(21) Application number: 04256930.1
(22) Date of filing: 09.11.2004
(51) Int. Cl.: F16D 3/223

(54) **Constant velocity joint having friction reducing web locators**

(30) Priority: 10.11.2003 US 705258
(71) Applicant: DANA CORPORATION, Toledo, OH 43697 (US)
(72) Inventor: Ingalsbe, Steven L, Toledo Ohio 43613 (US); Warnke, James W., Toledo Ohio 43615 (US)
(74) Representative: Giles, Ashley Simon

(57) **Abstract**

A constant velocity joint (10) includes an outer race (12) including an opening (22) defining an inner surface having a plurality of grooves (24) formed therein and an inner race (14) defining an outer surface (28) having a plurality of grooves (30) formed therein. Each of the inner race grooves (30) is associated with a corresponding one of the outer race grooves (24). A cage (18) extends between the outer race (12) and the inner race (14). The cage (18) has an outer surface (34), an inner surface, and a plurality of ball receiving apertures (36) that extend between the outer surface (34) and the inner surface. Each of the ball receiving apertures (36) is associated with a corresponding one of the associated grooves of the outer race (24) and the inner race (30). A ball (16) is disposed in each of the ball receiving apertures (36) of the cage (18) and extends into the associated grooves of the outer race (24) and the inner race (30). The outer surface (28) of the inner race (14) has a web (38) provided thereon that engages the inner surface of the cage (18). Alternatively, or in combination, the outer surface (34) of the cage (18) has a web (38) provided thereon that engages the inner surface of the outer race (12).

## Description

### BACKGROUND OF THE INVENTION

The present invention relates to a universal joint and more particularly to a constant velocity joint having raised webs formed on an outer surface of an inner race to engage spherically shaped portions of an inner surface of a cage, and raised webs formed on an outer surface of the cage to engage spherically shaped portions on an inner surface of an outer race.

A universal joint is a mechanical coupling device that provides a rotational driving connection between two rotatable shafts, while permitting such shafts to be oriented at an angle relative to one another. Universal joints are commonly used in the drive train systems of vehicles. For example, in most land vehicles in use today, an engine/transmission assembly generates rotational power from an output shaft through a driveshaft assembly to an input shaft of an axle assembly to rotatably drive the wheels of the vehicle. To accomplish this, a first universal joint is typically provided between the output shaft of the engine/transmission assembly and a first end of the driveshaft assembly, and a second universal joint is provided between a second end of the driveshaft assembly and the input shaft of the axle assembly. The first and second universal joints provide a rotational driving connection from the output shaft of the engine/transmission assembly through the driveshaft assembly to the input shaft of the axle assembly, while accommodating a limited amount of angular misalignment between the rotational axes of these three shafts.

Universal joints are commonly classified by their operating characteristics. One important operating characteristic relates to the relative angular velocities of the two shafts connected thereby. In a constant velocity type of universal joint, the instantaneous angular velocities of the two shafts are always equal, regardless of the angular orientation of the shafts. In a non-constant velocity type of universal joint, the instantaneous angular velocities of the two shafts vary with the angular orientation of the shafts (although the average angular velocities for a complete revolution are equal).

A typical constant velocity universal joint includes a cylindrical inner race connected to one of the shafts and a hollow cylindrical outer race connected to the other of the shafts. The outer surface of the inner race and the inner surface of the outer race have respective pluralities of grooves formed therein. Each groove formed in the outer surface of the inner race is associated with a corresponding groove formed in the inner surface of the outer race. A ball is disposed in each of the associated pairs of grooves. The balls provide a driving connection between the inner and outer races. A generally hollow cylindrical cage is typically provided between the inner and outer races for retaining the balls in the grooves. The cage has circumferentially extending inner and outer surfaces and a plurality of openings formed therethrough for receiving and retaining the balls.

In certain types of constant velocity joints, it is desirable that the inner race, the cage, and the outer race be restrained from relative axial movement. These types of constant velocity joints are often referred to as fixed center joints. To accomplish this, it is known to cause spherically-shaped portions of the outer surface of the inner race to engage corresponding spherically-shaped portions of the inner surface of the cage, and similarly to cause spherically-shaped portions of the outer surface of the cage to engage corresponding spherically-shaped portions of the inner surface of the outer race. However, the engagements of these various surfaces can result in the generation of undesirable friction and heat, particularly if the constant velocity joint is rotated at relatively high speeds (i.e., 1500 rpm or higher), is articulated at relatively large angles (i.e., 10° to 12° or higher), or is otherwise subjected to relatively large axial loads during use. Thus, it would be desirable provide a constant velocity joint that minimizes the amount of friction that is generated during use, especially when operated at relatively high speeds or articulated at relatively large angles, and further militates against relative axial movement between an inner race, a cage, and an outer race.

### SUMMARY OF THE INVENTION

This invention relates to an improved structure for a constant velocity joint that minimizes the amount of friction and heat that is generated during use, particularly if the constant velocity joint is rotated at relatively high speeds (i.e., 1500 rpm or higher), is articulated at relatively large angles (i.e., 10° to 12° or higher) or is otherwise subjected to relatively large axial loads during use. The constant velocity joint includes an outer race with a central aperture formed therein that defines an axis of rotation, wherein the outer race is adapted to be connected to a shaft. An inner surface of the outer race has a plurality of grooves formed therein. The constant velocity joint also includes an inner race having a central opening and an outer surface, wherein the central opening is adapted to receive a shaft therein. The outer surface of the inner race has a plurality of grooves formed therein, each of the grooves of the outer race being associated with a corresponding one of the grooves of the inner race. The constant velocity joint further includes a cage having a central aperture and an outer surface. The central aperture of the cage is adapted to receive the inner race therein. The cage has an annular array of ball receiving apertures formed therethrough that are aligned with the corresponding grooves of the outer race and the inner race. Each of the apertures formed through the cage has a ball disposed therein that extends into the corresponding grooves of the outer race and the inner race. The inner race has at least one web formed on the outer surface thereof that engages an inner surface of the cage. Alternatively, the cage has at least one web formed on the outer surface thereof that engages an inner surface of the outer race.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is an exploded perspective view of a first embodiment of a constant velocity joint in accordance with the present invention.
Fig. 2 is an enlarged perspective view of an inner race of the constant velocity joint illustrated in Fig. 1.
Fig. 3 is an enlarged perspective view of a cage of the constant velocity joint illustrated in Fig. 1.
Fig. 4 is an enlarged perspective view of a second embodiment of an inner race of a constant velocity joint in accordance with the present invention.
Fig. 5 is an enlarged perspective view of a second embodiment of a cage of a constant velocity joint in accordance with the present invention.
Fig. 6 is an enlarged perspective view of a third embodiment of a cage of a constant velocity joint in accordance with the present invention.
Fig. 7 is an enlarged perspective view of a fourth embodiment of a cage of a constant velocity joint in accordance with the present invention.

### DETAILED DESCRIPTION OF THE PREFERRED EMBODIMENTS

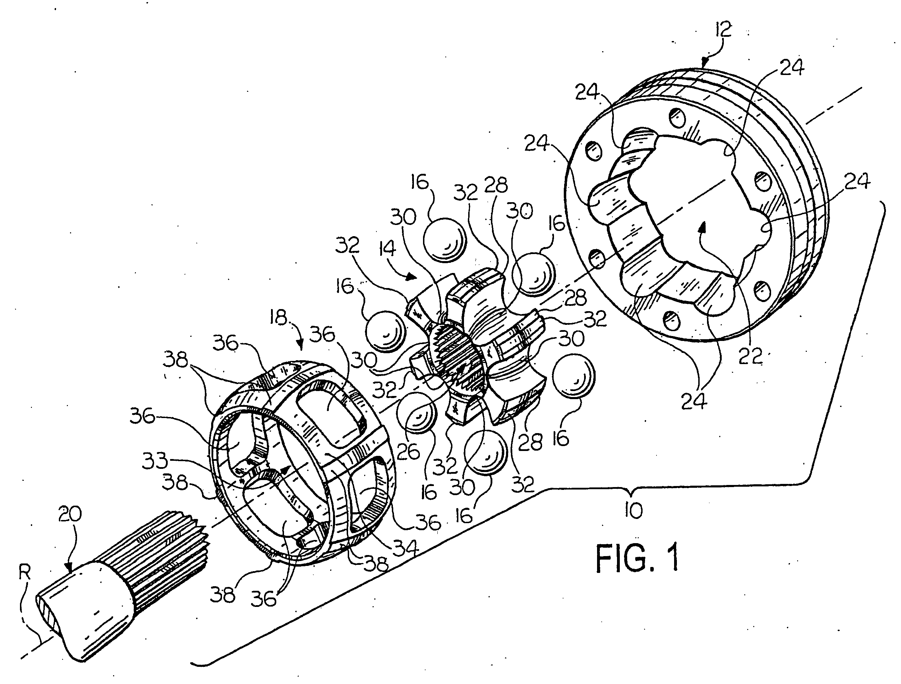

Referring now to the drawings, and particularly to Fig. 1, there is shown generally at 10 a constant velocity joint for use, for example, in a vehicle in accordance with the present invention. For illustrative purposes, a Rzeppa type constant velocity joint is shown and discussed. However, it is understood that the invention may be used with other types of constant velocity joints, such as cross-groove and double offset, for example, without departing from the scope and spirit of the invention. The illustrated constant velocity joint 10 includes an outer race 12, an inner race 14, a plurality of balls 16, a cage 18, and a splined shaft 20.

The outer race 12 is adapted to be connected to a shaft (not shown) that can be connected, for example, to an axle (not shown) of the vehicle. Fasteners, such as bolts, can be used to connect the outer race 12 to a flange disposed on the end of the shaft, for example. The outer race 12 has a central aperture or opening 22 formed therein. A plurality of grooves 24 is formed on an inner wall surrounding the opening 22 of the outer race 12. In the embodiment shown, six of such grooves 24 are formed. However, it will be appreciated that a greater or lesser number of such grooves 24 can be used as desired without departing from the scope and spirit of the invention. Each of the illustrated grooves 24 has a generally semi-circular cross sectional shape, although such is not required.

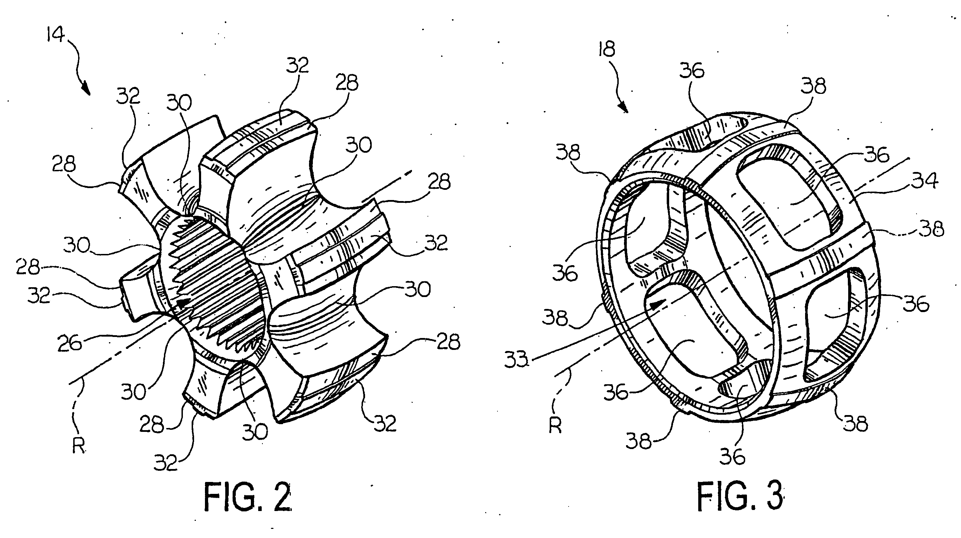

As more clearly shown in Fig. 2, the inner race 14 has a central splined opening 26 formed therethrough. The splined opening 26 is adapted to receive the splined shaft 20 and facilitates concurrent rotation of the splined shaft 20 and the inner race 14, as is well known in the art. The inner race 14 has an outer surface 28 that is generally cylindrical in shape, but is slightly curved along an axis of rotation R from one axial end of the inner race 14 to the other. A plurality of radially inwardly extending grooves 30 are formed in the outer surface 28 of the inner race 14. In the embodiment shown, six of such grooves 30 are formed. The number of grooves 30 formed in the outer surface 28 of the inner race 14 is preferably equal the number of grooves 24 formed in the outer race 12. However, it will be appreciated that a greater or lesser number of such grooves 30 can be used as desired without departing from the scope and spirit of the invention. The illustrated grooves 30 are formed to have altematingly inclined facing surfaces relative to the axis of rotation R. Each of the grooves 24 of the outer race 12 is associated with a corresponding groove 30 of the inner race 14.

One or more webs or raised surfaces 32 are formed on portions of the outer surface 28 of the inner race 14. In the illustrated embodiment, each of the webs 32 is located between adjacent pairs of the grooves 30 formed in the inner race 14. Each of the illustrated webs 32 includes a raised surface that extends radially outwardly from the outer surface 28 of the inner race 14 into engagement with an inner surface of the cage 18. Each of the illustrated webs 32 extends generally parallel to the axis of rotation R substantially along the entire axial length of the inner race 14, although such is not required. In the illustrated embodiment, each of the webs 32 has a height of approximately 0.50 mm as measured from the outer surface 28 and a width of approximately 3.80 mm as measured in a direction substantially perpendicular to the axis of rotation R. It will be appreciated that the webs 32 may be formed having dimensions that are smaller or larger as desired without departing from the scope and spirit of the invention. It will also be appreciated that similar web or webs could alternatively be formed on an inner surface of the cage 18 and extend radially inwardly therefrom into engagement with the outer surface of the inner race 14 without departing from the scope and spirit of the invention.

The cage 18 has a central aperture 33 and an outer surface 34 that may be shaped in accordance with the shape of the inner wall of the outer race 12. The central aperture 33 is adapted to receive the inner race 14 therein. An annular array of apertures 36 is formed through the cage 18. The apertures 36 are adapted to respectively receive the balls 16 therein and position the balls 16 in the grooves 24 of the outer race 12 and the grooves 30 of the inner race 14 when the constant velocity joint 10 is assembled.

One or more webs or raised surfaces 38 are formed on portions of the outer surface 34 of the cage 18. In the illustrated embodiment, each of the webs 38 is located between adjacent pairs of the apertures 36 formed through the cage 18. Each of the illustrated webs 38 includes a raised surface that extends radially outwardly from the outer surface 34 of the cage 18 into engagement with the inner surface of the outer race 12. Each of the illustrated webs 38 extends substantially parallel to the axis of rotation R substantially along the entire axial length of the cage 18, although such is not required. In the illustrated embodiment, each of the webs 38 has a height of approximately 0.50 mm as measured from the outer surface 34 and a width of approximately 3.80 mm as measured in a direction substantially perpendicular to the axis of rotation R. It will be appreciated that similar web or webs 38 may be formed having dimensions that are smaller or larger as desired can be used without departing from the scope and spirit of the invention. It will also be appreciated that similar web or webs could alternatively be formed on the inner surface of the outer race 12 and extend radially inwardly therefrom into engagement with the outer surface 34 of the cage 18 without departing from the scope and spirit of the invention.

Thus, when the components of the constant velocity joint 10 are assembled, rotational torque from the splined shaft 20 is transferred from the inner race 14 through the balls 16 to the outer race 12 and the shaft connected thereto. Thus, rotational engagement is maintained between the splined shaft 20 connected to the inner race 14 and the shaft connected to the outer race 12 through the inner race 14, the balls 16, and the outer race 12, as is well known in the art. Any angular misalignment between the splined shaft 20 connected to the inner race 14 and the shaft connected to the outer race 12 is accommodated within the constant velocity joint 10 by relative angular articulation of the inner race 14, the cage 18, and the outer race 12, as is also well known in the art.

At the same time, however, the outermost surfaces of the webs 32 provided on the outer surface 28 of the inner race 14 engage the inner surface of the cage 18. Similarly, the outermost surfaces of the webs 38 provided on the outer surface 34 of the cage 18 engage the inner surface of the outer race 12. Thus, the constant velocity join 10 is a fixed center joint, wherein relative axial movement between the outer race 12 and the inner race 14 is prevented.

In a conventional constant velocity joint, no webs are provided on the outer surface of the inner race or the inner surface of the cage. Thus, during operation, the surface area of the engaging portions of the outer surface of the inner race and the inner surface of the cage is relatively large (the magnitude of this surface area will vary with the angle of articulation of the joint). As a result, when the constant velocity joint is rotated at relatively high speeds (i.e., 1500 rpm or higher), articulated at relatively large angles (i.e., 10° to 12° or higher), or otherwise subjected to relatively large axial loads during use, an undesirably large amount of friction occurs between the engaging portions of the outer surface of the inner race and the inner surface of the cage. Such friction results not only in undesirable wear on the inner race and the cage, but also causes undesirable heat to be generated. In this invention, however, the webs 32 are provided on the outer surface 28 of the inner race 14 or the inner surface of the cage 18. Thus, during operation, the surface area of the engaging portions of the webs 32 of the inner race 14 and the inner surface of the cage 18 is relatively small. As a result, when the constant velocity joint 10 is rotated at relatively high speeds (i.e., 1500 rpm or higher), articulated at relatively large angles (i.e., 10° to 12° or higher), or otherwise subjected to relatively large axial loads during use, a significantly lesser amount of friction occurs between the engaging portions of the webs 32 of the inner race 14 and the inner surface of the cage 18.

Similarly, in a conventional constant velocity joint, no webs are provided on the outer surface of the cage or the inner surface of the outer race. Thus, during operation, the surface area of the engaging portions of the outer surface of the cage and the inner surface of the inner race is relatively large (the magnitude of this surface area will also vary with the angle of articulation of the joint). As a result, when the constant velocity joint is rotated at relatively high speeds (i.e., 1500 rpm or higher), articulated at relatively large angles (i.e., 10° to 12° or higher), or otherwise subjected to relatively large axial loads during use, an undesirably large amount of friction occurs between the engaging portions of the outer surface of the cage and the inner surface of the outer race. Such friction results not only in undesirable wear on the cage and the outer race, but also causes undesirable heat to be generated. In this invention, however, the webs 38 are provided on the outer surface 34 of the cage 18 or the inner surface of the outer race 12. Thus, during operation, the surface area of the engaging portions of the webs 38 of the cage 18 and the inner surface of the outer race 12 is relatively small. As a result, when the constant velocity joint 10 is rotated at relatively high speeds (i.e., 1500 rpm or higher), articulated at relatively large angles (i.e., 10° to 12° or higher), or otherwise subjected to relatively large axial loads during use, a significantly lesser amount of friction occurs between the engaging portions of the webs 32 of the cage 18 and the inner surface of the outer race 12.

The surface area defined by the webs 32 of the inner race 14 is preferably substantially smaller than the surface area defined by the outer surface 28 of the inner race 14 that would otherwise engage the inner surface of the cage 18. Similarly, the surface area defined by the webs 38 of the cage 18 is preferably substantially smaller than the surface area defined by the outer surface 34 of the cage 18 that would otherwise engage the inner surface of the outer race 12. As used herein, the term "substantially smaller" means that the surface area defined by the webs 32 is less than one-half of the surface area defined by the outer surface 28 of the inner race 14 that would otherwise engage the inner surface of the cage 18, and that the surface area defined by the webs 38 of the cage 18 is less than one-half of the surface area defined by the outer surface 34 of the cage 18 that would otherwise engage the inner surface of the outer race 12.

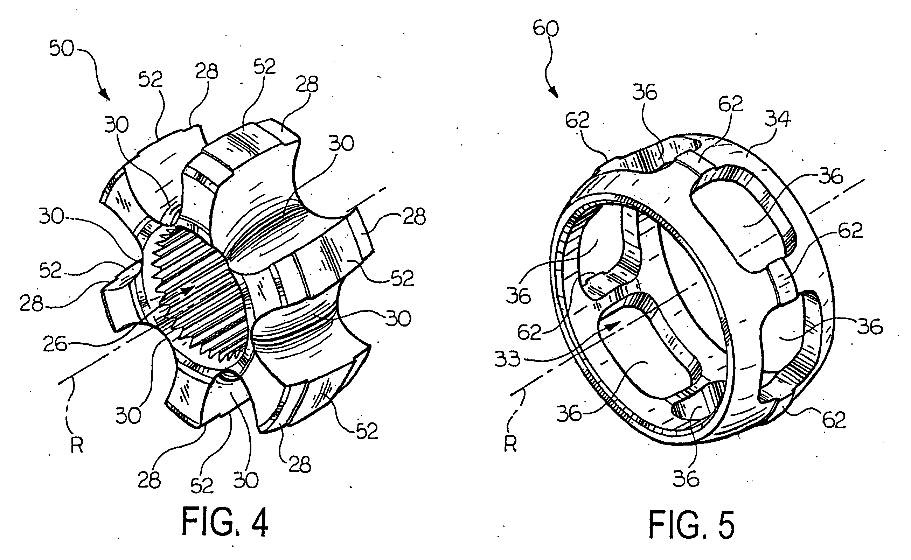

Fig. 4 illustrates a second embodiment of an inner race 50 for the Rzeppa type constant velocity joint 10 in accordance with the present invention. The second embodiment of the inner race 50 is, in large measure, similar to the first embodiment illustrated in Fig. 2, and like reference numbers are used to indicate similar components. In this embodiment of the invention, one or more webs or raised surfaces 52 are formed on portions of the outer surface 28 of the inner race 50. In the illustrated embodiment, each of the webs 52 is located between adjacent pairs of the grooves 30 formed in the inner race 14. Each of the illustrated webs 52 includes a raised surface that extends radially outwardly from the outer surface 28 of the inner race 14. Each of the illustrated webs 52 extends generally circumferentially relative to the axis of rotation R substantially along the entire length between the adjacent grooves 30 of the inner race 14, although such is not required. It will be appreciated that the webs 32 may be formed having dimensions that are smaller or larger as desired without departing from the scope and spirit of the invention. It will also be appreciated that similar web or webs could alternatively be formed on an inner surface of the cage 18 and extend radially inwardly therefrom without departing from the scope and spirit of the invention.

Fig. 5 illustrates a second embodiment of a cage 60 for the Rzeppa type constant velocity joint 10 in accordance with the present invention. The second embodiment of the cage 60 is, in large measure, similar to the first embodiment illustrated in Fig. 3, and like reference numbers are used to indicate similar components. In this embodiment of the invention, one or more webs or raised surfaces 62 are formed on portions of the outer surface 34 of the cage 18. In the illustrated embodiment, each of the webs 62 is located between adjacent pairs of the apertures 36-formed through the cage 18. Each of the illustrated webs 62 includes a raised surface that extends radially outwardly from the outer surface 34 of the cage 18. Each of the illustrated webs 62 extends generally circumferentially relative to the axis of rotation R substantially along the entire length between the adjacent apertures 36 of the cage 18, although such is not required. It will be appreciated that similar web or webs 62 may be formed having dimensions that are smaller or larger as desired can be used without departing from the scope and spirit of the invention. It will also be appreciated that similar web or webs could alternatively be formed on the inner surface of the outer race 12 and extend radially inwardly therefrom without departing from the scope and spirit of the invention.

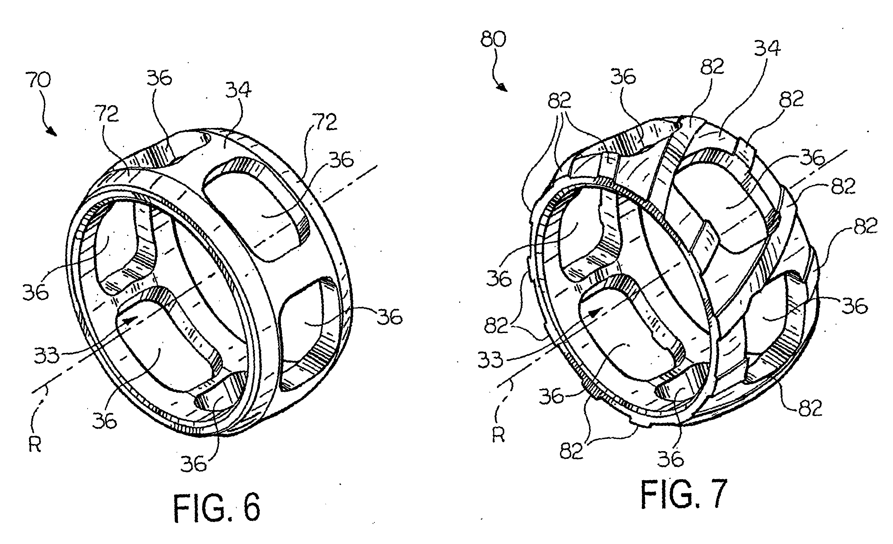

Fig. 6 illustrates a third embodiment of an inner race 70 for the Rzeppa type constant velocity joint 10 in accordance with the present invention. The third embodiment of the inner race 70 is, in large measure, similar to the first embodiment illustrated in Fig. 2, and like reference numbers are used to indicate similar components. In this embodiment of the invention, one or more webs or raised surfaces 72 are formed on portions of the outer surface 28 of the inner race 50. In the illustrated embodiment, two of such webs 72 extend circumferentially relative to the axis of rotation R and are located adjacent to the axial ends of the cage 70. It will be appreciated that the webs 72 may be formed having dimensions that are smaller or larger as desired without departing from the scope and spirit of the invention. It will also be appreciated that similar web or webs could alternatively be formed on an inner surface of the cage 18 and extend radially inwardly therefrom without departing from the scope and spirit of the invention.

Fig. 7 illustrates a fourth embodiment of an inner race 80 for the Rzeppa type constant velocity joint 10 in accordance with the present invention. The fourth embodiment of the inner race 80 is, in large measure, similar to the first embodiment illustrated in Fig. 2, and like reference numbers are used to indicate similar components. In this embodiment of the invention, one or more webs or raised surfaces 82 are formed on portions of the outer surface 28 of the inner race 50. In the illustrated embodiment, the webs 82 extend helically or diagonally relative to the axis of rotation R. It will be appreciated that the webs 82 may be formed having dimensions that are smaller or larger as desired without departing from the scope and spirit of the invention. It will also be appreciated that similar web or webs could alternatively be formed on an inner surface of the cage 18 and extend radially inwardly therefrom without departing from the scope and spirit of the invention.

In accordance with the provisions of the patent statutes, the principle and mode of operation of this invention have been explained and illustrated in its preferred embodiments. However, it must be understood that this invention may be practiced otherwise than as specifically explained and illustrated without departing from its spirit or scope.

## Claims

1. A constant velocity joint comprising:
an outer race including an opening defining an inner surface having a plurality of grooves formed therein;
an inner race defining an outer surface having a plurality of grooves formed therein, each of said inner race grooves being associated with a corresponding one of said outer race grooves;
a cage extending between said outer race and said inner race, said cage having an outer surface, an inner surface, and a plurality of ball receiving apertures that extend between said outer surface and said inner surface, each of said ball receiving apertures being associated with a corresponding one of said associated grooves of said outer race and said inner race;
a web provided on one of said (a) outer surface of said inner race that engages said inner surface of said cage, (b) inner surface of said cage that engages said outer surface of said inner race, (c) outer surface of said cage that engages said inner surface of said outer race, and (d) inner surface of said outer race that engages said outer surface of said cage; and
a ball disposed in each of said ball receiving apertures of said cage and extending into said associated grooves of said outer race and said inner race.

2. The constant velocity joint defined in Claim 1 wherein said web is provided on said outer surface of said inner race and engages said inner surface of said cage.

3. The constant velocity joint defined in Claim 1 wherein said web is provided on said inner surface of said cage and engages said outer surface of said inner race.

4. The constant velocity joint defined in Claim 1 wherein said web is provided on said outer surface of said cage and engages said inner surface of said outer race.

5. The constant velocity joint defined in Claim 1 wherein said web is provided on said inner surface of said outer race that engages and outer surface of said cage.

6. The constant velocity joint defined in Claim 1 wherein said web extends generally parallel relative to an axis of rotation of the constant velocity joint.

7. The constant velocity joint defined in Claim 1 wherein said web extends either generally circumferentially, helically, or diagonally relative to an axis of rotation of the constant velocity joint.

8. The constant velocity joint defined in Claim 1 wherein a plurality of webs are provided on one of said (a) outer surface of said inner race that engages said inner surface of said cage, (b) inner surface of said cage that engages said outer surface of said inner race, (c) outer surface of said cage that engages said inner surface of said outer race, and (d) inner surface of said outer race that engages said outer surface of said cage.

9. The constant velocity joint defined in Claim 8 wherein each of said webs extends generally parallel relative to an axis of rotation of the constant velocity joint.

10. The constant velocity joint defined in Claim 8 wherein each of said webs extends either generally circumferentially, helically, or diagonally relative to an axis of rotation of the constant velocity joint.
